# EUROPEAN PATENT APPLICATION

(11) **EP 2 607 987 A1**
(43) Date of publication of application: **26.06.2013**
(21) Application number: 11194408.8
(22) Date of filing: 19.12.2011
(51) Int. Cl.: G06F 1/20, G06F 1/32

(54) **Computing apparatus and system for remote control of operating states**

(71) Applicant: Fujitsu Limited, Kawasaki-shi, Kanagawa 211-8588 (JP)
(72) Inventor: Albornoz, Jose, Hayes, Middlesex UB4 8FE (GB)
(74) Representative: Hutchison, James

(57) **Abstract**

Embodiments of the present invention provide a computing apparatus configured to run an operating system, the computing apparatus comprising a component which is configured to operate in any one of a plurality of operating states, each operating state being associated with a different level of a performance characteristic, a baseboard management controller configured to run independently of the operating system, to receive a message from a remote management system including operating state setting information, and to communicate the operating state setting information to the operating system. The operating system is operable to accept the communication of the operating state setting information, to use the operating state setting information to select an operating state for the component from among the plurality of operating states, and to instruct the component to operate in the selected operating state.

## Description

This invention lies in the field of computing apparatuses and more specifically in the field of computing apparatuses in data centres or other systems in which power consumption and thermal management are monitored and controlled centrally.

Given their enormous electrical power consumption and associated carbon footprint, data centres are natural targets for techniques aimed at improving their energy efficiency and reducing their impact on the environment. This is especially true in light of the explosive growth in the number of data centres and the increasing dependence of our society on the information technology and computing services provided by them. Besides, energy costs are a major fraction of the operating costs of data centres, becoming almost as important as the cost of the facilities and equipment.

It is thus desirable to find ways to reduce power consumption and maximize energy efficiency in data centres. A data centre power and thermal management system may be required to keep track of the performance of hundreds or thousands of servers from a wide range of manufacturers, monitoring power consumption and temperature at the processor/chipset/system level, generating alerts and taking actions to reduce energy usage and overheating while guaranteeing quality of service.

The Intelligent Platform Management Interface (IPMI) system is a remote centralized management system standardised across equipment manufacturers to enable remote management of computing resources in a data centre or otherwise arranged computing environment. An IPMI-enabled computing apparatus (such as a server) has a baseboard management controller (BMC) that contains the intelligence to run the IPMI core; the BMC makes possible in-band or out-of-band communication with an external management system even in a powered-down or crashed server. On-board sensor data such as temperatures, voltages, currents and fan speeds are made available to IPMI through A/D converters; event-logging, inventory, and recovery capabilities such as remote re-boot and power cycling are also supported.

Similarly, the Data Centre Manageability Interface (DCMI) standard allows for server power monitoring and limiting as well as for monitoring of baseboard, CPU and inlet temperatures. However there is no monitoring/control of the power consumed by individual devices nor there is a provision to perform specific cooling actions in response to thermal events. Similarly, Intel's Intelligent Power Node Manager (IPNM) provides automatic intelligent power capping, real-time server power monitoring, and data-logging capabilities, but the technology does not include thermal monitoring or cooling strategies.

It is thus desirable to provide a power and thermal management system that monitors and controls server power usage while at the same time ensuring adequate cooling of the IT equipment as well as service availability.

Embodiments of the present apparatus provide a computing apparatus configured to run an operating system, the computing apparatus comprising a component which is configured to operate in any one of a plurality of operating states, each operating state being associated with a different level of a performance characteristic; a baseboard management controller configured to run independently of the operating system, to receive a message from a remote management system including operating state setting information, and to communicate the operating state setting information to the operating system; wherein the operating system is operable to accept the communication of the operating state setting information, to use the operating state setting information to select an operating state for the component from among the plurality of operating states, and to instruct the component to operate in the selected operating state.

IPMI is a server monitoring architecture that operates independently of the main processor, BIOS and operating system, allowing remote system administration even in a crashed or powered-down server. However, IPMI is mainly focused on monitoring; there are no provisions in the standard for control actions besides some simple functions like reset and power on/off. Embodiments of the present invention provide a baseboard management controller, that is a specialised microcontroller embedded on the motherboard of a computing apparatus (such as a computer), such as a baseboard management controller configured to operate in accordance with the IPMI, DCMI, or IPNM standards, having the above-defined capability to communicate information from messages from a remote (centralised) management system to the operating system. In this way, the invention embodiments provide computing apparatuses which have the operating system-independent reporting and control capabilities associated with the IPMI standard, but which can also enable a remote management system (RMS) to exert control over operating states usually only available to the operating system.

A computing apparatus embodying the present invention provides a means by which a computing system having one or more of the following combination of desirable characteristics can be realised:
- In-band/out-of-band connectivity providing the capacity to perform remote power-cycling/reboot in crashed or powered down servers.
- Remote administration of system sleep states.
- Remote administration of component (for example device & processor) power states.
- Remote administration of thermal monitoring & control strategies, with the ability to set and enforce active/passive/critical cooling policies.
- Centrally-controllable adjustable balance between performance and power consumption at the device/processor level.
- Possibility to interact with the cooling system of the data centre/computing facility/enclosure cooling system.
- An ability to compromise between centralised vs. local management. The centralised data centre management system is able to set particular cooling/power management strategies in the servers, but at the same time each server's Operating System-directed configuration and Power Management (OSPM) /BMC is able to change/override these strategies in an adaptive manner in response to thermal/workload events. The BMC may have sufficient intelligence to allow it to override policies set by the RMS in certain circumstances.

An operating system may be considered to include a program or set of programs for managing computer hardware resources and providing a platform for (user-accessible or other) applications and services to interface with the computer hardware resources.

A baseboard management controller may be considered to include a specialised microcontroller embedded on the motherboard of a computer and configured to transmit and receive management data (including reporting data) both in-band (i.e. within the primary network normally used to transmit data in the computing system or environment in question, such as the ethernet), and out-of-band on a dedicated management channel such as a serial console access or even a separate management LAN.

The operating state setting information may define a command, for example, enforcing a setting (or an increment/decrement of a setting) or a general policy. Optionally, the operating state setting information is a command to select a particular operating state.

Advantageously, the computing apparatus is thus able to support remote setting of operating states, including operating states only accessible via the operating system. The particular operating state may be specified in relative or absolute terms. In embodiments in which the operating state setting information is a selection command, sensor data may be sent from a network of sensors to the remote management system via the baseboard management controller, and the remote management system may be configured to select an operating state for a component in dependence upon the received sensor data in accordance with an operating state selection policy.

Optionally, the plurality of operating states of the component are defined by the Advanced Configuration and Power Interface, ACPI, standard, and the instructing of the component by the operating system is performed in accordance with the ACPI standard.

The Advanced Configuration and Power Interface (ACPI) (see, for example, Advanced Configuration and Power Interface Specification Revision 5.0, 6 December 2011) is an open standard for hardware discovery, configuration, power management, and monitoring for an *individual* mobile, desktop, or server platform. ACPI's behaviour is defined through ASL (ACPI Source Language), a pseudo code format that supports ACPI's programming model. ASL code is compiled into AML (ACPI Machine Language) binaries, which are then included in the computer's flash BIOS. On boot, AML binaries run on a virtual machine supported by an ACPI-compatible OS (a paradigm described by the term *Operating System-directed configuration and Power Management, OSPM*), and therefore ACPI's functions are under the exclusive control of the operating system. ACPI offers a wide range of control actions such as
- System power management: mechanisms are provided to put the computer as a whole in and out of different sleep states; mechanisms allowing any device to wake up the computer are also possible.
- Processor & devices power management: selection of the power states (exemplary of operating states) of processor and motherboard devices. These power states range between fully-on and fully off, with intermediate states associated to different levels of power consumption, preservation of device context, and restore times.
- Processor & devices power/performance management: when in their active/executing states, processors and devices can be transitioned into different performance states (also exemplary of operating states) by scaling voltage and/or clock frequency to achieve a balance between performance and power consumption.
- Thermal management: Definition of thermal zones (a region that physically contains devices, thermal sensors, and cooling resources), thermal indicators, and active/passive/critical methods for cooling thermal zones (active cooling actions, such as turning on a fan or increasing its speed, increase the power consumption to achieve temperature reduction; passive cooling (which reduces power consumption of components in order to reduce heat generation), such as CPU throttling, reduces the power consumption of a device at the cost of system performance in order to reduce temperature; and critical cooling consists of the OSPM performing an orderly shutdown of a device or the entire system once a trip point has been crossed).
- System events: A flexible general event monitoring mechanism (i.e. thermal events, power management events, docking, device insertion and removal, etc.)

In known ACPI-based apparatuses, the ACPI cooling and power policies are defined in the external binaries contained in the BIOS and therefore cannot be changed externally: once these binaries are loaded the OS retains exclusive control over all power/performance management and thermal control aspects. This last aspect makes ACPI useless in a crashed or powered-down computing apparatus; it also precludes remote setting of thermal management policies (including cooling policies) and power states. Embodiments of the present invention enable remote setting of states and policies by instructing the OS via the baseboard management controller.

The range of operating states for components of a computing apparatus in an ACPI-based apparatus results in significant potential energy consumption savings whilst ensuring performance requirements are met. However, some energy saving and cooling actions can impact the availability and response times of a data centre. Since the setting of ACPI states is conventionally controlled by the operating system exclusively, system administrators are wary of availability and response times of a data centre being impacted without their control, hence disable ACPI-capabilities in the individual computing apparatuses and miss out on the potential energy savings. Advantageously, computing apparatuses embodying the present invention enable remote state and policy setting, hence the potential energy consumption savings of ACPI may be realised.

Therefore, embodiments of the present invention may be provided which provide the precise and responsive control of operating states associated with the ACPI standard, and the remote and operating-system-independent monitoring and basic reset capabilities of the IPMI standard, in an integrated way. That is to say, the remote setting of ACPI operating states by the remote management system may be provided as an extension to the IPMI standard.

The message from the remote management system to the baseboard management controller may be in the form of an OEM-defined extension of the ACPI and IPMI standards. Extending the IPMI standard in this way enables power efficiency in a data centre to be improved while preserving availability and responsiveness. This may provide any of: remote administration of server power management strategies, optimal use of cooling resources, remote management capacity regardless of server status (active, powered down or crashed), fine-grained monitoring of consumed power and temperature at the device/processor/system level, and a compromise between centralised/local management.

ACPI directives are conventionally issued from the BIOS, and hence performance and thermal control policies for setting ACPI operating states of components can only be set at boot time. In embodiments of the present invention, the performance and thermal control policies can be set at any time and not just at boot time, giving system administrators the ability to decide when and where these capabilities are going to be used.

The component of the computing apparatus may be considered to be an electrical component making a net thermal contribution while operating.

Depending on the particular implementation of invention embodiments, the net thermal contribution of the component in relation to the computing apparatus may be as a heat source, and the performance characteristic is hence power consumption. A component may be a piece of hardware which consumes electrical power in order to perform a certain task. In doing so, heat will be generated, and hence the component acts as a heat source. Assuming the component makes little or no contribution to the removal of heat from the computing apparatus, the net thermal contribution of the component is as a heat source. Advantageously, in embodiments of the present invention in which operating states of a component acting as a heat source can be effectively managed, control over the power consumption of the computing apparatus, and potentially of an entire data centre, can be managed, perhaps in accordance with a particular policy or goal. For example, the ability to alter the operating state of a component which acts as a heat source enables the controlling entity, for example the remote management system, to control both power consumed and heat generated. Such a component may be controlled as part of a power management policy or performance management policy, or as part of a passive cooling process.

Alternatively, the net thermal contribution of the component in relation to the computing apparatus is as a cooling component, and the performance characteristic is heat transfer rate. A component may consume electrical power in order to perform its task, and hence make a contribution as a heat source. However, the task being performed may have the effect of removing heat from the computing apparatus, or from a particular thermal zone of the computing apparatus, and hence the net thermal contribution may be as a cooling component. An example of such a component is a fan. Even though running a fan at high speed will generate some heat, the effect of blowing cool air over other hot components in the computing apparatus has the net effect of removing heat from the system. Advantageously, the ability to control the operating state of such components remotely allows cooling policies to be implemented which combine the contribution of the cooling system of the data centre as a whole with the contribution of the cooling system of an individual cooling component in a server or other computing apparatus.

Optionally, embodiments of the present invention may be configured to report measured values of environmental (for example, temperature) and operating (for example, workload) variables within the computing apparatus. Optionally, a computing apparatus embodying the present invention may comprise one or more sensors configured to provide one or both of the operating system and the baseboard management controller with data relating to an environmental variable and/or an operating variable.

An environmental variable may be, for example, temperature, absolute humidity, or relative humidity, so that the data relating to an environmental variable is a value read from a temperature or humidity sensor. Examples of operating variables include workload, clock speed, fan speed, supply voltage to a particular component (or group of components), and current drawn by a particular component (or group of components). Sensors could be any hardware or software entity configured to give readings indicative of those variables. The data relating to an operating variable in those examples is then a value read from those sensors. The data from sensors may be subject to A/D conversion prior to being supplied to the operating system or baseboard management controller. A given sensor may be configured to provide one or the other or both of the operating system and the baseboard management controller with data. Alternatively or additionally, a sensor may be provided as a function of several pieces of hardware and/or software in cooperation with one another. For example, workload monitoring functionality, that is, a sensor for reporting measured values of workload, may be provided by the network interface card (NIC) operating in conjunction with the OSPM to convert raw data indicating incoming traffic levels to a metric representing workload. Such a metric may be used by the OSPM, or reported to the RMS (via the BMC or otherwise).

Optionally, the operating system is configured to use the data received from the one or more sensors to select one of the plurality of operating states of the system controller in accordance with an operating state selection policy, and to instruct the component to operate in the selected one of the plurality of operating states.

In particular implementations of the present invention, it may be desirable for the operating system to control operating state selection policy in certain circumstances, for example, when fast changes to operating states are required due to imminent risk of thermal damage cause by a critical thermal event.

The correspondence between reported data from sensors and the operating state that should be selected for a component may be defined by a policy, for example, an operating state selection policy. Optionally, the operating state selection information may include an operating state selection policy.

Advantageously, setting the operating state selection policy centrally enables the operating states to be set by the operating system in response to local information and sensor data, but for overall policy control to be centralised. For example, it may be that at a particular time of day, required response times are such that no server should ever be fully 'off', although certain components may be able to be operated in an energy-saving operating state. These requirements can be reflected in a modified operating state selection policy which still enables the operating system to use sensor data and operating-system-level logic to be used to determine operating states of components, but which precludes certain combinations of operating states at certain times, or tends towards or away from operating states or combinations of operating states.

The RMS could use any of several methods to determine the optimal operating state(s) or operating state selection policy for the computing apparatus. One example of such methods is running a simulation using a model (for example, a computerised simulation on a computerised model of the computing apparatus and/or data centre or enclosure in which the computing apparatus is located) to find optimum settings.

Furthermore, environmental and operating variable (for example, workload and temperature) monitoring at a computing apparatus may be used to decide if the ACPI power and thermal policies set by a Remote Management System (RMS) will be either enforced or overridden to preserve server performance and integrity. ACPI power and thermal policies are examples of operating state selection policies.

It may be that the reporting of data from the sensors is performed via the baseboard management controller to the remote management system. Optionally, the operating system is configured to communicate the data received from the one or more sensors to the baseboard management controller; and the baseboard management controller is configured to transmit a message to the remote management system including information based on the communicated data.

Advantageously, collating reported data centrally at a remote management system allows the remote management system to make policy and control decisions on behalf of the computing apparatus. It may be that the remote management system also stores reported data from other computing apparatuses, and hence an operating state of a component of a computing apparatus may be informed by reported data from one or more other computing apparatuses. Furthermore, the remote management system may also be configured to control a cooling system for the enclosure, such as a data centre room, within which the computing apparatus is housed. In that case, the remote management system may be configured to take into account both the operating state of the cooling system and the reported data from a computing apparatus in selecting an operating state for a component of that computing apparatus.

The present invention may also be embodied by a system comprising at least one computing apparatus as defined and described above and housed within an enclosure, and a remote management system for managing operating states of one or more components within the computing apparatus.

A system embodying the present invention may be a server within a data centre room as the computing apparatus, and a controlling computer or functional module as the remote management system. A remote management system may be within the same enclosure, or may be elsewhere, but has at least one data connection to the computing apparatus being managed, and is remote in the sense that it is not part of the computing apparatus. The remote management system may be provided in a centralised manner in which a single remote management system is configured to manage operating states of the components of more than one computing apparatus. The system may be applied to other situations such as those encountered in mobile computing, in which there is a need to limit power consumption and manage thermal status of an ACPI-enabled computing apparatus.

A system embodying the present invention may further comprise a cooling system configured to remove heat from the enclosure. The cooling system may be, for example, an air conditioning system including fans, water pumps, heat exchangers and control equipment. Advantageously, in embodiments having a cooling system, the remote management system may be configured to set an operating state of the cooling system, to produce operating state setting information in dependence upon the operating state of the cooling system, and to send a message including the produced operating state setting information to the baseboard management controller of each of one or more of the at least one computing apparatuses housed within the enclosure. Optionally, the remote management system may be configured to use the information from the sensor data message to select one of the plurality of operating states of the component in accordance with an operating state selection policy, and to transmit a message including operating state setting information to the baseboard management controller wherein the operating state setting information is a command to select a particular operating state. Advantageously, managing operating states centrally enables a single entity to have sight of operating states of components in more than one computing apparatus, and possibly also of a cooling system for the enclosure housing those computing apparatuses. Therefore, management decisions can be made which take into account not only the conditions at a single computing apparatus, but at all computing apparatuses and cooling systems controlled by the remote management system.

Embodiments of another aspect of the present invention provide a method for performance in a computing apparatus configured to run an operating system, the computing apparatus having a baseboard management controller configured to run independently of the operating system, and a component which is configured to operate in any one of a plurality of operating states, each operating state being associated with a different level of a performance characteristic, the method comprising: at the baseboard management controller, receiving a message from a remote management system including operating state setting information, and communicating the operating state setting information to the operating system; and accepting the communication of the operating state setting information to the operating system, the operating system using the operating state setting information to select an operating state for the component from among the plurality of operating states and instructing the component to operate in the selected operating state.

Features and sub features of different embodiments and different aspects of the present invention may be combined with one another without departing from the scope of the present invention.

Preferred features of the present invention will now be described, purely by way of example, with reference to the accompanying drawings, in which:-
Figure 1 is a schematic diagram of a computing apparatus embodying the present invention;
Figure 2a illustrates a system embodying the present invention;
Figure 2b illustrates a system embodying the present invention including a variation from the system of Figure 2a;
Figure 3 illustrates a flow of control in a system embodying the present invention;
Figure 4 illustrates control procedures performed at an operating system in an embodiment of the present invention;
Figure 5 illustrates the flow of control in an emergency cooling procedure initiated in an embodiment of the present invention;
Figure 6 illustrates an operating state setting policy for managing states of components in a computing apparatus embodying the present invention;
Figure 7 illustrates thermal management policy as an example of an operating state setting policy for managing states of components in a computing apparatus embodying the present invention.

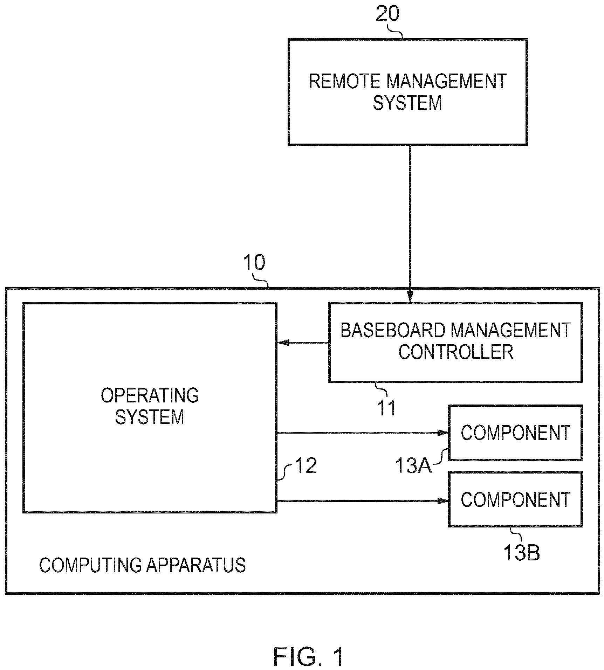

Figure 1 illustrates a computing apparatus 10 embodying the present invention, and a system embodying the present invention, the system including the remote management system 20 and the computing apparatus 10.

The computing apparatus 10 may be a server, or may be another type of computer, for example, a user node. The computing apparatus may be provided within an enclosure, for example, within a data centre entirely housed within an enclosure, within a room of a data centre, or within some other environment.

The computing apparatus is configured to run an operating system 12, using a processor, storage, memory, and other hardware components (hardware components are referred to simply as 'components' in this document for ease of reference) connected to a motherboard, those same components and the resources they provide being managed by the operating system 12. An operating system 12 may be considered to be a program or set of programs for managing computer hardware resources, such as the components listed above, and providing a platform for (preferably user-accessible) applications and/or services to interface with the computer hardware resources.

The computing apparatus 10 also comprises a baseboard management controller 11 embedded on the same motherboard as the components. A baseboard management controller (BMC) may be considered to be a specialised microcontroller embedded on the motherboard of a computer and configured to transmit and receive management data (including reporting data) both in-band (i.e. within the primary network normally used to transmit data in the computing system or environment in question, such as the ethernet), and out-of-band on a dedicated management channel such as a serial console access or even a separate management LAN. In embodiments of the present invention, the BMC 11 may have the functionality required of a BMC 11 in the IPMI specification, as a portion of and in addition to the functionality required to operate in accordance with embodiments of the present invention.

The computing apparatus 10 has been illustrated with two components 13A and 13B. Of course, embodiments of the present invention could have any number of components. These components are hardware components having one or more operating states which may be set as part of a management policy, whether the management policy be thermal, performance, or power. Each operating state of the components 13A-B, is associated with a different level of a performance characteristic, such as ability to remove heat from the computing apparatus 10, clock speed, voltage, power consumption, ability to perform work, or a metric combining more than one single performance characteristic. The components 13A-B, having these operating states may or may not be the same components mentioned above as being used to run the operating system 12 and being managed by the operating system 12. Furthermore, each component may be configured to be run in a particular thermal state at the same time as being run in a particular power management state. A component may be, for example, a fan, a power supply unit, a CPU, an additional processor, a network interface card (NIC), a graphics card, a display unit, a soundcard, a storage unit, an I/O unit, or any other component which can be operated in more than one operating state.

The remote management system (RMS) is configured to generate a message including operating state setting information and to transmit the message to the baseboard management controller.

The RMS 20 may be configured to receive sensor data representing an operating or environmental variable in the computing apparatus from sensors in the computing apparatus and to select an operating state for one or more components in dependence upon the sensor data in accordance with an operating state setting policy. The operating state setting policy may be, for example, a thermal management policy, a performance management policy, a power consumption management policy, an ACPI cooling policy, or an ACPI power policy, or any other set of rules for selecting an operating state for a component in dependence upon sensor data. The message including operating state setting information may then be an instruction or command to set the operating state of a component.

Alternatively or additionally, it may be the operating system 12 that is configured to receive the sensor data and to select an operating state based on a policy, as described above with reference to the RMS 20. In such embodiments, operating state setting information including policy details to enable the operating system 12 to select an operating state in dependence upon sensor data may be sent to the BMC 11 from the RMS 20.

The BMC 11 is configured to receive the message including operating state setting information from the RMS 20, and to communicate the operating state setting information from the message to the operating system 12. The BMC 11 may have firmware which is configured to extract the operating state setting information from the message, and to reformat it into a format in which it can be interpreted by the operating system 12. For example, the RMS 20 and BMC 11 may be configured to communicate with one another in accordance with the IPMI standard (see, for example, Intelligent Platform Management Interface Specification, Second Generation - V2.0 June 12 2009 Markup), extended to allow exchange of information required for embodiments of the present invention, whereas the BMC 11 may be configured to instruct the operating system 12 to set an ACPI operating state for the component 13A or 13B.

The communication of the operating state setting information by the BMC 11 to the operating system 12 is in a format enabling the operating state setting information to be interpreted by the operating system 12. The operating system 12 may be configured to run a script using a virtual machine to enable such interpretation to take place.

The operating system 12 is operable to accept the communication of the operating state setting information, to use the operating state setting information to select an operating state for the component 13A and/or 13B from among the plurality of operating states, and to instruct the component to operate in the selected operating state. For example, it may be that the operating state setting information is simply an instruction for a fan to operate at a higher speed, or for a processor to run at a particular clock speed, in which case the operating system 12 is configured to instruct the components accordingly. Alternatively, the operating state setting information may be policy information, for example, setting a new minimum threshold temperature in a particular thermal zone for changing to a higher fan speed. The next time the operating system 12 receives sensor data from a sensor providing data indicating the temperature in that thermal zone, the new policy information can be used to instruct the fan (component) accordingly.

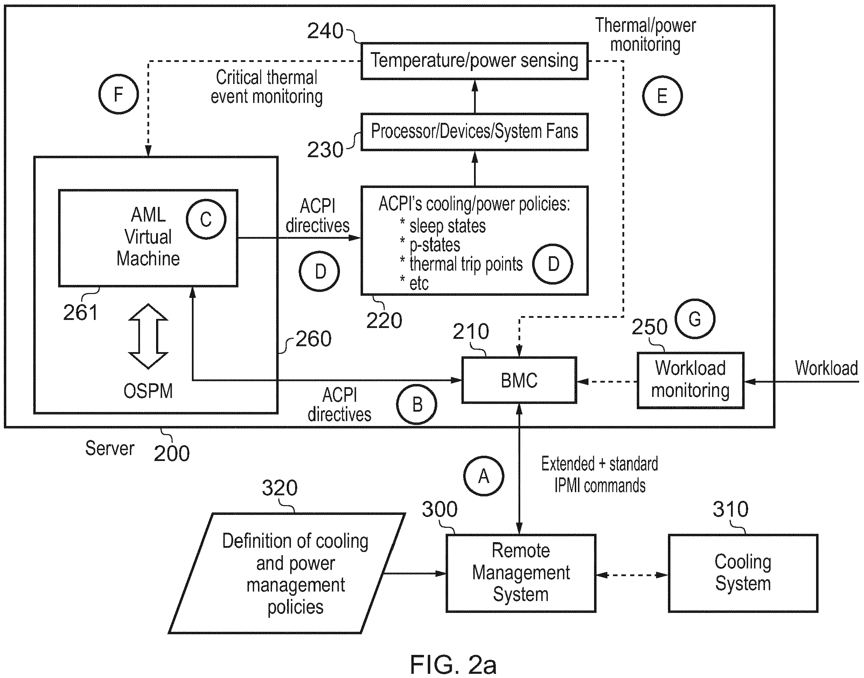

Figure 2a illustrates a system embodying the present invention, including a server 200 as an example of a computing apparatus 10, a remote management system 300, and a cooling system 310 for an enclosure in which at least the computing apparatus is housed. The computing apparatus in the example of Figure 2a is a server 200, and the enclosure may therefore be a room in a data centre comprising additional servers having the same configuration as the illustrated server, and each sharing a common remote management system 300.

In the illustrated embodiment, the remote management system (RMS) 300 is configured to issue commands which extend the IPMI standard (extended commands) in a message to the baseboard management controller 210 of the server 200. Messages according to the IPMI standard (standard commands) may also be exchanged between the BMC 210 and the RMS 300. Each extended command corresponds to a particular ACPI power/performance state (that is, an operating state of a server component); and additional extended commands are also defined to enable the RMS to control each of ACPI's performance and thermal management policies (as examples of operating state selection policies). As shown in Figure 2a, extended commands are transmitted from an RMS 300 and received by a server's BMC 210 (A); the BMC 210 is configured to translate (that is, to modify the format of) these extended commands into ACPI directives (B) that run in an AML Virtual Machine 261 (C). Such functionality may be realised via the BMC firmware. The ACPI directives produced by the BMC 210 may be of a format consistent with that generated by the BIOS in a conventional ACPI-enabled server. In the present embodiment, the ACPI directives produced by the BMC 210 and communicated to the AML virtual machine 261 allow an ACPI driver or AML interpreter to modify a current operating state of a component of the server, and/or to modify tables and registers that control ACPI's power and cooling policies 220 (D) (also referred to as thermal and performance management policies). These policies 220 can thus be adjusted dynamically in response to extended IPMI commands issued by the remote management system 300. A computing apparatus 200 embodying the present invention may store a script accessible by the OSPM 260 to be executed in the AML virtual machine 261 each time an ACPI directive is received (communicated to it) from the BMC 210. Such a script provides a mechanism by which the OSPM 260 is operable to accept and execute ACPI directives issued by the BMC 210.

The IPMI specification (see, for example, section 5 of the Intelligent Platform Management Interface Specification, Second Generation - V2.0 June 12 2009 Markup) provides a format for commands which extend the standard. Embodiments of the present invention may be configured to receive messages at the BMC 210 which extend the IPMI standard, which messages may be generated and transmitted by a remote management system 300. The illustrated implementation of the invention embodiment includes the definition of an standard-extending set of IPMI commands each associated to a particular ACPI cooling policy or power state.

The IPMI standard specification allows remote monitoring of temperatures and device/processor/system power consumption through the BMC (E) via temperature and power sensing means (sensors) 240. In the present embodiment, the same sensor or network of sensors which gather information for remote monitoring of temperatures and power consumption at or by device/processor/system fans 230 and report sensor data through the BMC 210 to the RMS 300 may also be used to provide sensor data relating to environmental and operating variables to the operating system (OSPM) 260. The RMS 300 receives this power/temperature information (as an example of data relating to an operating variable and environment variable) and is configured to respond by issuing extended commands to set new power/performance states, or to modify the ACPI power and cooling policies 220 being enforced by the operating system 260 in response to the data received by the operating system 260 as data relating to an operating variable and/or an environmental variable. That is to say, centralised control of thermal and performance management policies which utilise ACPI-defined operating states of servers 200 and their components 230 is enabled via commands which extend the IPMI standard. Furthermore, in the present embodiment the RMS 300 is configured to set ACPI cooling policies in the servers based on the settings or performance of the cooling system 310 of the data centre itself. For instance, the RMS 300 may respond to a thermal event in a group of servers by shifting to active cooling policies (i.e. increasing fan speeds) and decreasing the setpoint of a neighbouring CRAC, while minimizing the energy required to address the event.

Critical thermal events are an example of events which may be addressed directly and immediately by the OSPM (F) 260, by using a sensor or network of sensors 240 in the server 200 to provide the OSPM 260 with data relating to operating or environmental variables. The OSPM 260 is configured to take action once it is notified of the occurrence of a critical thermal event through a system control interrupt (SCI) generated by a temperature sensor, overriding thermal policies set by the RMS 300.

As seen in Fig. 2a, the server's workload is monitored (G) through the BMC 210 (although workload monitoring could also be performed by the RMS 300 in cooperation with the workload monitoring functionality of the server or computing apparatus) as an example of an operating variable. The reason for this monitoring is that some power policies (such as CPU throttling or sleep states) affect server performance, and should be immediately overridden in case of a surge in workload. For instance, during periods of low activity the RMS 300 can enable system sleep states or CPU throttling; at the same time the capability to respond to workload events is preserved by enabling the BMC 210 to signal the OSPM 260 in order to disable passive cooling/sleep states and shift to wake states and active cooling if a surge in workload is detected. In this way, policies 260 set by the RMS 300 are enforced generally, but at the same time the capacity to react to local conditions is preserved. In embodiments in which the BMC 210 is used to perform workload monitoring the workload is monitored with very little energy consumption since the BMC 210 consumes minimal stand-by power regardless of sleep states of other components 230.

An exemplary mechanism for performing workload monitoring at the BMC 210 is to use the IPMI's sensor data records (SDR) to describe an OEM-defined sensor type (see, for example, Section 42.2 of the Intelligent Platform Management Interface Specification, Second Generation - V2.0 June 12 2009 Markup) associated with the network interface controller (NIC). Communication between the NIC and the BMC 210 could then be performed via a network controller sideband interface (NC-SI) such as SMBus or on a dedicated line.

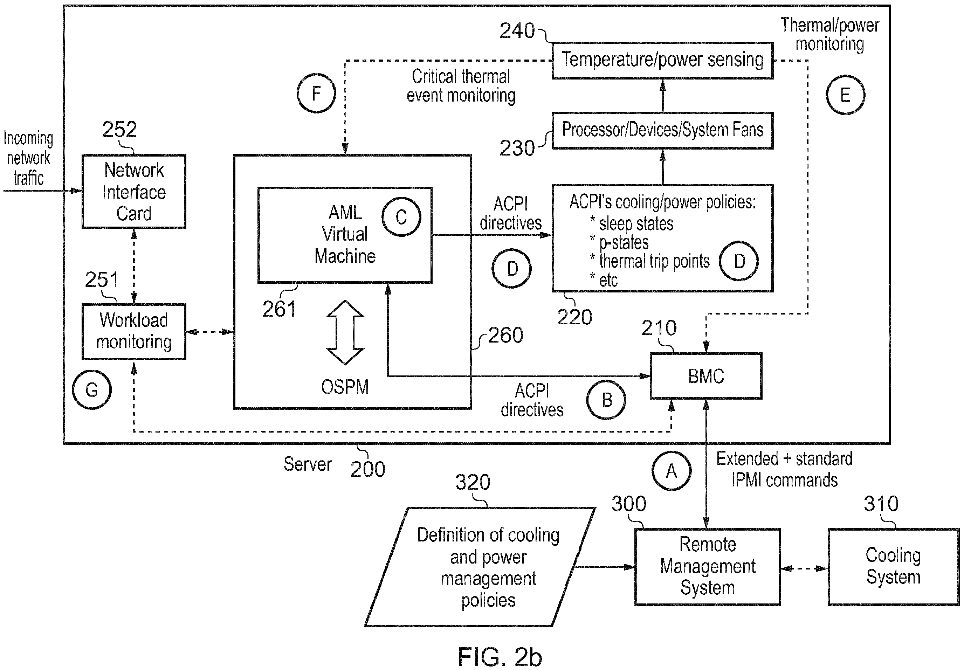

The system illustrated by Figure 2b is the same as that illustrated by Figure 2a in all but the composition or formation of the workload monitoring functionality. Hence description of like elements is omitted. In Figure 2b, the computing apparatus 200 also comprises a Network Interface Card (NIC) 252. The NIC 252 is configured to handle and monitor incoming network traffic. The workload monitoring sensor 251 is illustrative of a workload monitoring function performed by the NIC 252 operating in cooperation with the OSPM 260 and the BMC 210.

The workload monitoring functionality may be implemented by defining a OEM-defined sensor 251 associated to the NIC 252, and the NIC 252 may contain intelligence enabling it to monitor workload as defined by some metric, with the possible cooperation/intervention of the operating system (such as the OSPM 260). The synergistic interaction of the BMC 210, the NIC 252, and optionally also the OSPM 260 thus constitutes a workload monitoring sensor 251. In some implementations, infrequent network requests arriving at the NIC 252 can trigger processes that can keep the server 200 busy for an extended period, and therefore a raw network traffic measure (as provided by the NIC 252) may not by itself be a suitable measure of a server's workload. In such implementations, a metric representing workload calculated by providing a measurement of raw network traffic to the OSPM 260 from the NIC 252, and using that measurement along with predefined logic, or heuristic data, at the OSPM 260 to calculate a value or set of values representing workload. The value or set of values representing workload may be reported to the BMC 210 by the OSPM 260 via the mechanism of the workload monitoring sensor 251, which is defined as an OEM-defined sensor in accordance with the IPMI specification and is hence operable to provide sensor data records to the BMC 210. Monitoring the data provided by the network monitoring sensor 251 may be performed by the OSPM 260, the BMC 210, or the RMS 300. Hence the workload monitoring functionality is provided by a combination of the workload monitoring sensor and the entity or entities responsible for monitoring the data generated by the workload monitoring sensor.

Returning now to subject matter common to both Figures 2a and 2b, the BMC 210 or other mechanism or function responsible for workload monitoring functionality may be configured to perform an action from a limited set of actions in response to a corresponding event. The event may be, for example, workload reaching a predetermined threshold level, and the corresponding action transmitting an alert message to one or both of the RMS 300 and the OSPM 260. Alternative available actions include power down (of the server) and reset (of the server). Certain events or combinations of events may give rise to actions which are set as mutually exclusive at the BMC 210, so that one action must be prioritised over another. Such prioritisation is discussed in section 17 of the Intelligent Platform Management Interface Specification, Second Generation - V2.0 June 12 2009 Markup. Optionally, the BMC firmware may be configured to calculate a workload metric and to execute more actions in response to changes in workload.

The RMS 300 is configured to use thermal information provided from the BMC 210 via thermal sensors 240 positioned at various locations within the server 200 to either set an ACPI operating state or states of components (including fans, processors, power supplies) 230 within the server 200, or to set appropriate ACPI thermal management policies 220 (as an operating state selection policy) for use by the operating system 260. Furthermore, the RMS 300 is configured to change the settings of the cooling system 310 for the room or enclosure (or subsection thereof) housing the server 200 in response to said thermal information, or to use the settings of the cooling system 310 to select operating states or operating state selection policies for server components 230.

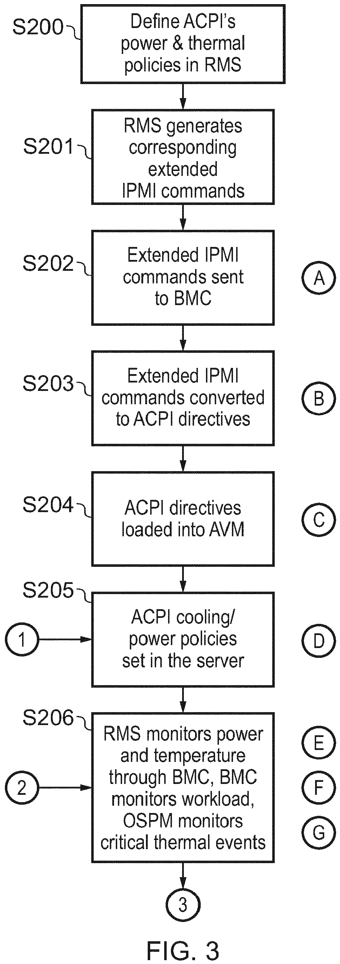

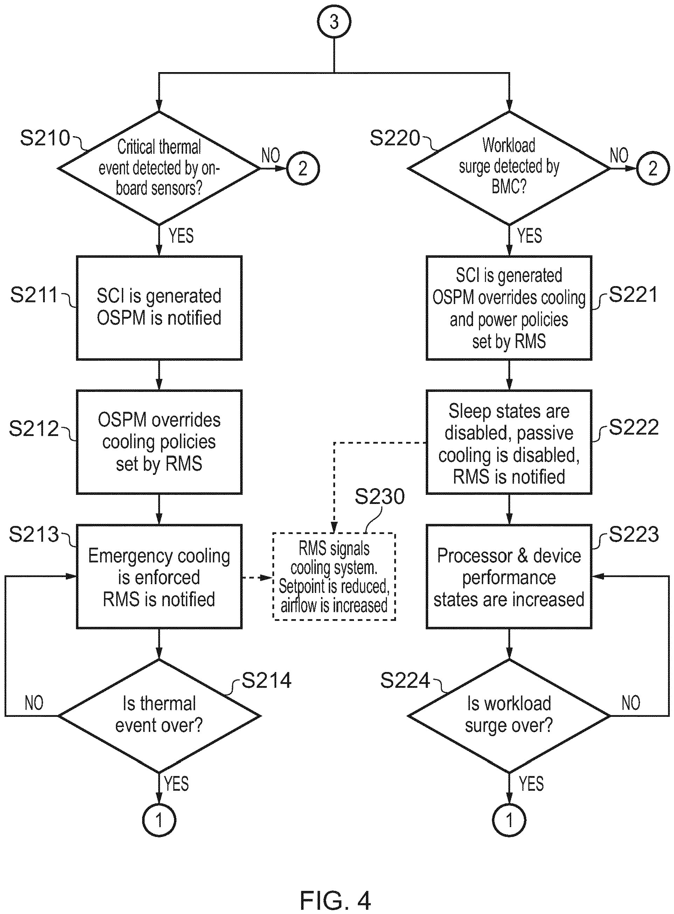

Figures 3 and 4 show the flow of control actions and decisions corresponding to the embodiment illustrated in Figures 2a and 2b (some steps are labelled with a capital letter within a circle to establish their correspondence with the architecture depicted in Figure 1 and the previous description).

At step S200, the ACPI power and thermal policies are defined at the RMS 300. It may be that a remote management system in an embodiment is preconfigured with ACPI power and thermal policies by a manufacturer, alternatively, a program or script defining the ACPI power and thermal policies may be available. Alternatively, the policies could be configured manually by a system administrator. As a further alternative, ACPI power and thermal policies could be derived by running a simulation using a model (for example, a computerised simulation on a computerised model of the computing apparatus and/or data centre or enclosure in which the computing apparatus is located) to find optimum settings given certain combinations of preconditions and environmental and operating variables. The remote management system 300 is then aware of the available operating states of the server components, and the trigger events or range of values of a certain variable associated with particular operating states. In some cases, a range of power and thermal policies may be defined, so that the RMS 300 can select a suitable policy based on reported conditions in the data centre room or computing apparatus itself.

The flow then continues to step S201 at which commands extending the IPMI specification corresponding to each ACPI operating state for each component, and for changing ACPI power and thermal policies, are generated at the RMS. Such commands may be consistent with the format defined in the IPMI specification, but providing functionality beyond that considered therein.

The flow then continues to step S202. Steps S202 to S205 may be performed on a per-event basis, wherein the event may be a trigger event for a particular component operating state or a new server being added to the data centre or a server being turned on from a mechanical off. That is to say, there may be an initial 'learning' process in which the steps of S202 to S205 are performed to configure the AML Virtual Machine (AVM) 261 in particular (and possibly also the BMC 210) to interpret the ACPI directives and extended IPMI commands, whereafter the commands and directives are sent on an 'execution' basis, in order to actually modify the operating state(s) of one or more server components. In some implementations, the learning process will not be required.

At step S202 an extended IPMI command or set of commands is sent to the BMC 210. The command is a message including operating state setting information. At step S203 the BMC 210 alters the format of the message as required by the particular implementation of the embodiments, and communicates the operating state setting information to the OSPM 260 as an ACPI directive. At step S204, the operating state setting information is loaded into the AVM 261 as an ACPI directive, and the AVM 261 (as part of the operating system) is configured to interpret the ACPI directive and to act accordingly, for example, by setting or modifying the ACPI cooling or power policies in the server (at step S205). The circled numerals (nodes) connecting to and leading from steps S205 and S206 indicate how the flow of Figure 3 connects to the additional detail given in Figure 4.

The setting of operating states and the setting and modification of ACPI cooling and power policies are performed in dependence upon data relating to environmental and operating variables gathered by one or more sensors in the server itself and in the data centre or computing environment (step S206). In the example of this embodiment, the RMS monitors power consumption and temperature at various components or locations via sensors which report data to the BMC 210, and the BMC 210 then transmits the reported data to the RMS. The BMC 210 monitors workload as described above, and the OSPM 260 monitors critical thermal events (to decide when to override ACPI policies).

Note that workload and thermal monitoring may include hysteresis in order to prevent unnecessary notifications when workload/temperature fluctuates close to the tripping point. The RMS can have enough flexibility to configure cooling and power in each and every server of the computer room if so desired, or to apply a given configuration to groups of servers in particular racks.

Some of the monitoring is defined in more detail in Figure 4, in which actions which take place under the control of the OSPM 260 are described. The actions and functions of Figure 4 address events that require immediate action. For instance, a server may be located in a spot where the airflow delivered by the cooling system does not have the adequate temperature to control the server temperature, due to effects such as air recirculation or bypassing. In these conditions, passive and/or active cooling measures implemented in the server may be insufficient to keep the temperature of the server's components within acceptable limits once the workload reaches a given level, and therefore emergency cooling actions would be required in order to preserve the integrity of the computing equipment. Such emergency cooling measures would also be needed in case of failures of the cooling system. If the on-board sensors detect a critical thermal event at step S210, the flow proceed to S211. If no critical thermal event is detected, the monitoring continues, as indicated by node 2 which leads to the monitoring step S206. Detection of a critical thermal event at step S210 triggers generation of a system control interrupt (SCI) at step S211 to signal the OSPM 260 to override the cooling policies set by the RMS at step S212. A sequence of emergency cooling actions are then activated at step S213 that, if not successful in eventually ending the thermal event, or not ending the thermal event with a predetermined time period, will lead to an orderly server shutdown. In addition, at step S213 the RMS is notified so that the cooling system of the data centre room (the enclosure) can be set to operate in a state in which it removes more heat from the server, as shown at step S230. The orderly server shutdown can hence itself be considered an ultimate emergency cooling action. If these cooling actions are successful, the thermal event can be considered over at step S214 and original ACPI settings are restored via step S205.

The workload monitoring functionality, described above as the defined sensor for measuring workload, and the entity or entities responsible for monitoring workload measurements, may detect a workload surge (sudden increase in workload) at step S220 and generate a SCI that immediately disables cooling and power policies set by the RMS at step S221. Actions can then be taken, triggered by the detection of a workload surge by the workload monitoring functionality, to prepare the server to handle the workload. For example, actions to prepare the server to handle the workload may include disabling sleep states and disabling passive cooling, as illustrated at step S222. The RMS is also notified that the ACPI power management policy has been overriden. At step S230, the RMS, anticipating an increase in heat generation, can then set the cooling system of the data centre room (the enclosure) to operate in a state in which it removes more heat from the server. The processor and other server components are set to operate in states in which they can handle an increased workload at step S223. This may be achieved by using ACPI states or otherwise. Power consumption/performance operating states are hence moved towards a state of increased performance and increased power consumption. Once the workload event ends (yes at step S224) the original ACPI settings are restored.

The term 'emergency cooling actions', which in the embodiment described above are instructed by the OSPM 260 at step S213, may describe a variety of different actions or combinations of actions. Depending on the particular implementation, emergency cooling actions may be instructed in response to a thermal critical event or otherwise, and may be instructed/initiated by the OSPM 260 upon overriding the ACPI thermal policy, by the OSPM 260 as part of the ACPI thermal policy, or as an ACPI operating state in a command message from the RMS.

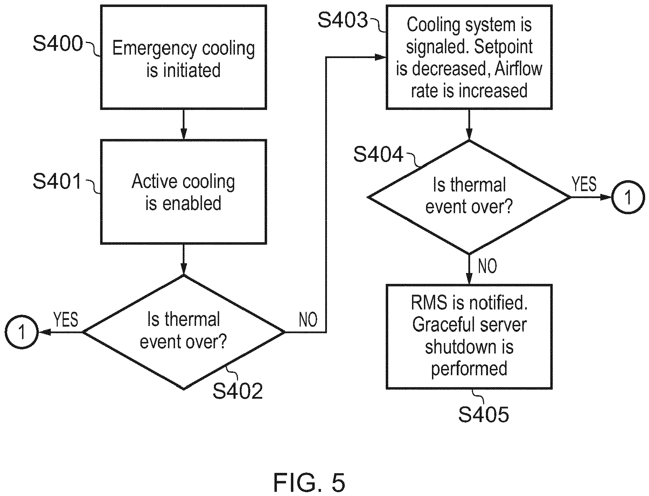

An exemplary series of actions as part of an emergency cooling process are illustrated in Figure 5. The 'node' 1 in Figure 5 illustrates where, had the ACPI thermal policy set by the RMS been overridden to enter emergency cooling, the flow of control would return to step S205 of Figure 3.

At step S400 the emergency cooling is initiated. Active, passive, and critical cooling strategies are then applied in a prescribed sequence in order to address the causal thermal event. At step S401, active cooling is enabled, active cooling may include, for example, increasing the fan speed. At step S402, a further determination of whether the thermal event is over or not is made. The thermal event may be deemed to be over when a particular temperature sensor gives a reading below a critical threshold. If the thermal event is over, in this example the flow returns to step S205 of Figure 3 so that the RMS can set ACPI thermal and power policies in the server. If it is determined at step S402 that the thermal event is not over, the flow proceeds to step S403 at which the cooling system of the data centre room (as an example of an enclosure in which the server is housed) is signalled. The cooling system may be signalled directly by the OSPM 260, or it may be signalled via the BMC 210 and/or the RMS. The setpoint (the temperature which the system aims to attain) of the cooling system is decreased, and the airflow rate is increased (either as a consequence of the reduced setpoint, or via some other mechanism, such as a direct instruction).

At step S404 a determination is once again made of whether or not the thermal event is over. Depending on the particular implementation details of the embodiment, there may be a 'cooling' period between steps S401 and S402 and between steps S403 and S404 (and hence between steps S213 and S214) to enable the cooling measures some time to take effect before a determination as to their effectiveness (whether or not the thermal event is over) is made. The length of the cooling period may be user-configurable or predetermined, and may be dependent upon the nature of the thermal critical event. Alternatively, the cooling period length may be found by running a simulation using a model (for example, a computerised simulation on a computerised model of the computing apparatus and/or data centre or enclosure in which the computing apparatus is located) to find optimum settings. For example, a particular high recorded temperature, or a critical temperature at a location in the server likely to cause damage, may give rise to a shorter cooling period than another thermal critical event. If the thermal event is still not over, the flow proceeds to step S405. Some additional passive cooling actions may be taken, such as decreasing the performance state of certain components, or CPU throttling. Alternatively or in addition, at step S405 the RMS is notified that the thermal event has endured the previous cooling actions, and a server shutdown is performed, either directly instructed by the OSPM 260, or by the RMS instructing the BMC 210. The server shutdown may be a graceful server shutdown.

Table 1 below sets out a list of ACPI power states, examples of operating states of components of the computing apparatus, that various components or groups of components of the computing apparatus can be operated in. In embodiments implementing the ACPI power states as operating states of components, extended IPMI commands corresponding to each of some or all of the ACPI power states must be defined, in order that the RMS can transmit information setting a particular ACPI power state to the BMC 210 for communication to the OSPM 260. In addition, extended IPMI commands may be defined to set policies using the power states defined in table 1.

In terms of components or groups of components to which the ACPI power states of the table are applied, according to Revision 5.0 (December 2011, p. 18) of the ACPI Specification, a "device" is a "*Hardware component outside the core chip set of a platform. Examples of devices are liquid crystal display (LCD) panels, video adapters, Integrated Drive Electronics (IDE) CD-ROM and hard disk controllers, COM ports, and so on. In the ACPI scheme of power management, buses are devices."* The Specification also states (p. 17) that *"Global system states apply to the entire system, and are visible to the user."* So "global" states apply to a server but may also refer to any other ACPI-enabled system (mobile phone, tablet, etc.).

**Table 1: ACPI's power states**

| **ACPI Power State** | **Description** | |
|---|---|---|
| Global | G0 | Working - system responds in real time |
| | G1 | Sleeping - no threads are being executed |
| | G2 | Soft-off: the system must be re-started |
| | G3 | Mechanical off |
| Sleeping | S0 | Working - minimum latency |
| | S1 | Sleeping: Low wake-up latency |
| | S2 | Sleeping: processor/cache state lost |
| | S3 | Suspend to RAM: all system context lost except RAM |
| | S4 | Hibernation: lowest power consumption |
| Device | D0 | Fully on |
| | D1/D2 | Intermediate power state |
| | D3 | Power off |
| Processor | C0 | Executing instructions |
| | C1 | Halt: no instructions are executed |
| | C2 | Clock stopped |
| | C3 | Sleep |
| Processor and Device Performance | P0 | Maximum power consumption and performance |
| | P1 | Scaling of voltage/frequency |
| | Pn | Performance and power consumption at a minimum |

Similarly, table 2 sets out a list of ACPI thermal trip points, examples of operating states of components of the computing apparatus, that various components or groups of components of the computing apparatus can be operated in. In embodiments implementing the ACPI thermal trip points to set operating states of components, extended IPMI commands corresponding to each of some or all of the ACPI thermal trip points must be defined, in order that the RMS can transmit information defining a particular ACPI thermal trip point to the BMC 210 for communication to the OSPM 260. In addition, IPMI commands may be defined to set a particular thermal state at the computing apparatus, for example, passive cooling/fan-high speed/fan-low speed/critical shutdown.

**Table 2: ACPI's thermal trip points**

| **Trip Point** | **Description** |
|---|---|
| Passive cooling | Passive cooling strategies are enforced |
| Fan - low speed | Fans operating at low speed |
| Fan - high speed | Fans operating at high speed |
| Critical shutdown | Critical heating - device/system is shut down |

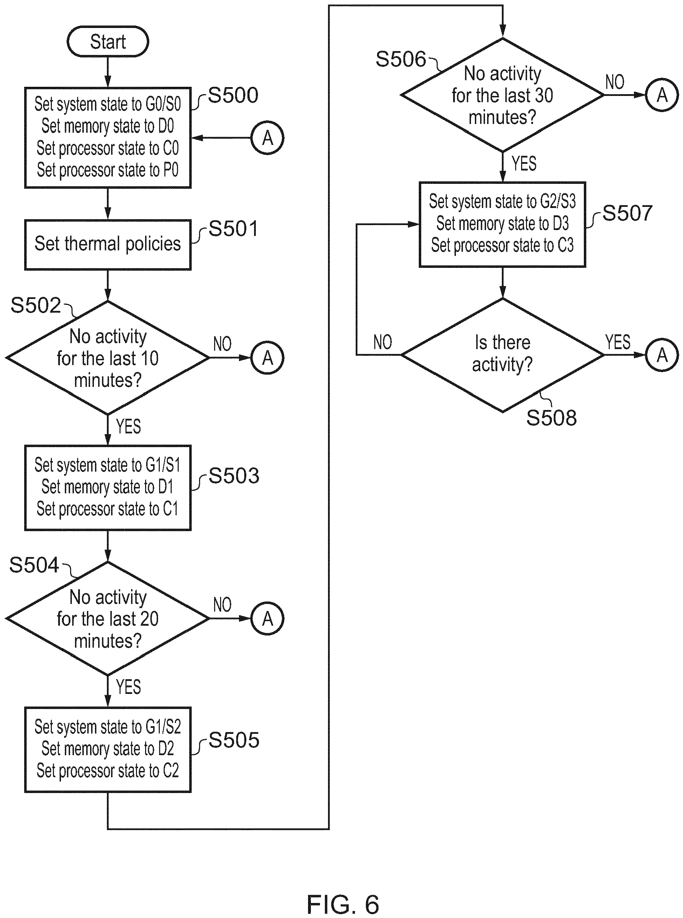

Figure 6 sets out an example of a control flow for setting operating states of computing apparatus components by an RMS 300. The RMS 300 is kept informed of the workload at the computing apparatus via a mechanism or workload monitoring functionality such as that described in relation to Figure 2a or Figure 2b, and where necessary, the further reporting of workload data to the RMS 300. The RMS is then configured to, in accordance with the control flow of Figure 6, set an operating state of one or more of the computing apparatus components. The choice of operating state is dependent upon workload, and time since workload was last received. As can be seen from Figure 6, the computing apparatus is initially set to operate at its operating state allowing it to handle the greatest workload, and the workload it can handle is decreased stepwise as the time since last activity increases, and the operating state decreases.

The start of the process may be due to the computing apparatus being powered on, or may be after handling of a particular event, such as a critical thermal event, or it may be after handling an amount of work. Node A corresponds to a return to the start of the process.

Initially, at step S500, the system state is set to G0/S0 so that the system can respond in real time, and it is not in a sleep state. The devices and processor are at D0 and C0 respectively, and the processor and device performance is set to P0, so that the devices and processor are operating at their maximum clock rate and voltage, and the system can respond in real time.

The thermal policy for the computing apparatus can then be set at step S501.

Depending on the particular implementation of the invention embodiment, one of the RMS, the BMC 210 and the OSPM 260, or workload monitoring functionality may be provided by the coordinated interaction of some combination of those elements, as described above in relation to Figures 2a and 2b. Whichever element is responsible for workload monitoring may be configured with activity metrics to determine a minimum level of activity to register as 'activity' in the sense of steps S502, S504, and S506. Alternatively, the element responsible for workload monitoring may simply detect a workload level via a sensor or otherwise and report the workload level to, for example, the RMS to apply the thresholds. Furthermore, the level of activity required to register as activity ('threshold activity level') may be different at each of those steps, and may be subject to change. For example, considerations such as time to transition out of a lower operating state if additional workload capacity is required, and ability to handle workload in the lower operating state may be taken into account. That is to say, the threshold activity levels may be defined on a per-transition basis, and on a per-component basis. In addition, there may be graded threshold activity levels so that the transitions are not always into the operating state immediately above or below the present operating state. Furthermore, the amount of time for which the activity level must exceed the threshold activity level during the preceding ten minutes (or whatever time period is used) may depend on the particular implementation of the invention embodiment, and may be configurable or definable. For example, it may be that a single spike over the threshold activity level is sufficient to deem the threshold activity level has been exceeded, otherwise it may be that the threshold activity level must have been exceed for at least say, 60 seconds over the course of the preceding ten minutes.

After 10 minutes, the element responsible for workload monitoring checks the activity level. If, for each component, the activity level has not exceeded a threshold activity level for 10 minutes (or has not exceeded that level for a defined configurable portion of that 10 minutes), the RMS transmits a message to the BMC 210 with information to set the operating state of that component to a lower level. In the example of Figure 6, for simplicity, a single activity threshold is applied to decide whether all components or groups of components should remain in their present operating state or not. If the activity is below the threshold activity level at step S502, the flow proceeds to step S503 and the system state is set to a low-latency sleep state G1/S1, the memory state is set to a low power state D1, and the processor state is set to a halted state C1. Details on each operating state can be found in table 1 above. If it is not below the threshold activity level, the components remain at the higher operating states, and the flow returns to node A (step S500).

At step S504 the assessment of whether or not the threshold activity levels have been exceeded is again made. If they have been exceeded, it is deemed that 'No', there has not been 'No' activity, and the flow returns to the start. If they have not been exceeded, and the period of inactivity is hence deemed to have continued beyond 20 minutes, the states are changed again at step S505. The sleep state of the system is deepened, and the system goes into sleep state G1/S2 in which processor and cache context are lost, memory goes into a low power state D2, and the processor clock is stopped.

If, at step S506, it is deemed that the inactivity period lasts more than 30 minutes, then at step S507 the system goes into a soft-off state G2/S3 in which all system context is lost except RAM; memory is powered off, and the processor goes into a soft-off state.

At step S508 a more or less continuous check for activity is performed. The minimum threshold activity applied in this case may be low, so that a small amount of workload is sufficient to cause the RMS to return the operating states to their highest levels by returning to step S500. The check may be performed periodically, for example every second or every minute, at intervals determined from a workload prediction heuristic so that the check frequency reflects predicted workload, or it may be event-based, such as being triggered by the arrival of a message from the NIC.

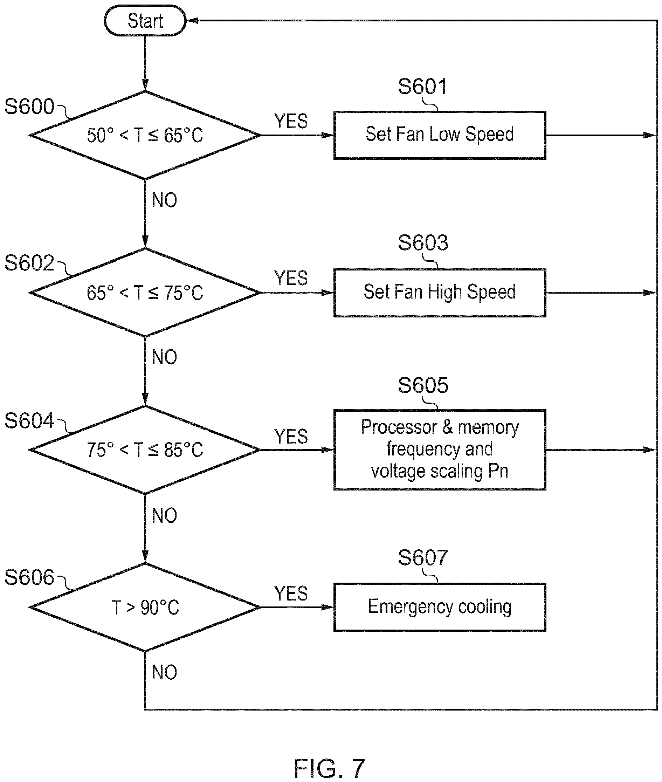

Figure 7 shows a possible thermal policy remote configuration. In the embodiment illustrated in Figures 2a and 2b the temperature data is fed to the RMS via the BMC 210 so that the RMS can decide apply a policy to those temperature data and set the ACPI thermal state of the computing apparatus (perhaps on a per-thermal zone basis) accordingly. Alternatively, the temperature data could be reported to the OSPM 260 so that the OSPM 260 can apply a thermal policy in order to set the thermal state of the computing apparatus (again possibly on a per-thermal zone basis). In the exemplary policy illustrated by Figure 7, if the temperature of a particular thermal zone is measured to be below 50°C, then no cooling is performed. The fan is off and no passive cooling measures are taken by virtue of the thermal state in which the components of that thermal zone are commanded to operate. At step S600 it is determined whether or not the temperature in a given thermal zone (as measured by a sensor or sensors within the computing apparatus) lies between 50° and 65° C, and if so, at step S601 the fans cooling that zone are set to operate at a low speed. The flow then returns to the start so that the temperature checking can be considered a continuous process. As the temperature increases to between 65° and 75° C ('Yes' at step S602), the flow proceeds to step S603 and the fans are set to operate in a state in which they run at a higher speed. If at step S604 it is determined that the temperature lies between 75° and 85° C passive cooling policies are employed: processor and memory enter Pₙ states where clock frequency and voltage are scaled by a factor n. If it is determined at step S606 that the temperature has risen beyond 90° C emergency cooling actions are invoked at step S607. It must be remembered that thermal policies enforced at the computing apparatuses may be overridden if the OSPM 260 detects a critical thermal or workload event. We note that the components remain in the operating state set by the most recent command until the criterion to switch to a different state is met, so that for temperatures between 85° C and 90° C the passive cooling measures would persist. Similarly, the passive cooling measures in step S605 are in addition to the active cooling measures of step S603.

What has been described in the preceding paragraphs is a particular example of a hardware arrangement and system of states, thresholds, trigger actions, and administration procedures. Embodiments of the invention are not limited to the particular examples given, for example, the data centre administrator can maintain control over the combination of ACPI policies that are in effect in the servers at any given time by interacting with the remote management system. Server ACPI configuration can be set as a function of factors such as workload, physical location and availability of cooling resources (for example, components such as fans); at the same time the capacity of the system to react to workload surges is preserved by the combination of central/distributed management and in particular by the ability of the OSPM 260 to override thermal and power policies being set by the RMS in order to respond to certain events. For instance, the configuration of a server or group of servers could be set using a heuristic model built upon suitable workload metrics to perform efficient ACPI policy scheduling: during a low activity period the remote management system could configure the servers to go into a deep sleep operating state (e.g. S4) if no requests are received in a given period of time (time-out lapse).

As the workload increases the management system could pre-emptively increase the ability of the server to handle workload by allowing only low-latency sleep states (S1/S2), eventually disabling sleep states during periods of peak activity. Additionally, either the management system or a human administrator, possibly supported by running a simulation or set of simulations using a model (for example, a computerised simulation on a computerised model of the computing apparatus and/or data centre or enclosure in which the computing apparatus is located) to find optimum settings, could use information about the thermal history of the servers to set cooling policies that depend on workload: for instance, during low activity periods the preferred policy can be passive cooling, while in periods of increasing activity active cooling actions will be favoured. It must be borne in mind that these strategies can be overridden at any time if a surge in workload is detected in order to meet quality of service requirements, such as those which may be defined in a service level agreement (SLA). The operating states that components can be set to operate in as part of power-saving strategies that can be implemented are not limited to sleep states or processor speed-stepping: policies that take advantage of power states of network and storage devices can also be implemented. Furthermore, in embodiments in which each server monitors its workload (either via the OSPM 260 or via the BMC 210, or via the coordinated interaction of a synergistic combination of one or more of those elements), a variety of power saving strategies can be implemented while at the same time guaranteeing quality of service requirements such as may be required by an SLA. In this sense embodiments of this invention encourage administrators to allow computing apparatuses to take advantage of the power-saving potential of ACPI.

Where in this description operating states are defined as being higher or lower than other operating states, the particular metric by which the relative levels of the operating states are defined will depend upon the particular implementation of the invention. For example, it could be the amount of power the component consumes operating in that state, the amount of workload it is operable to handle in that operating state, or some other metric.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A computing apparatus configured to run an operating system, the computing apparatus comprising:
a component which is configured to operate in any one of a plurality of operating states, each operating state being associated with a different level of a performance characteristic;
a baseboard management controller configured to run independently of the operating system, to receive a message from a remote management system including operating state setting information, and to communicate the operating state setting information to the operating system; wherein
the operating system is operable to accept the communication of the operating state setting information, to use the operating state setting information to select an operating state for the component from among the plurality of operating states, and to instruct the component to operate in the selected operating state.

2. A computing apparatus according to claim 1, wherein the operating state setting information is a command to select a particular operating state.

3. A computing apparatus according to claim 1 or 2, wherein the plurality of operating states of the component are defined by the Advanced Configuration and Power Interface, ACPI, standard, and the instructing of the component by the operating system is performed in accordance with the ACPI standard.

4. A computing apparatus according to any of claims 1 to 3, wherein the net thermal contribution of the component in relation to the computing apparatus is as a heat source, and the performance characteristic is power consumption.

5. A computing apparatus according to any of claims 1 to 3, wherein the net thermal contribution of the component in relation to the computing apparatus is as a cooling component, and the performance characteristic is heat transfer rate.

6. A computing apparatus according to any of claims 1 to 5, further comprising:
one or more sensors configured to provide the operating system with data relating to an environmental variable and/or an operating variable.

7. A computing apparatus according to claim 6, wherein
the operating system is configured to use the data received from the one or more sensors to select one of the plurality of operating states of the component in accordance with an operating state selection policy, and to instruct the component to operate in the selected one of the plurality of operating states.

8. A computing apparatus according to claim 7, wherein
the operating state selection information includes an operating state selection policy.

9. A computing apparatus according to any of claims 6 to 8, wherein
the operating system is configured to communicate the data received from the one or more sensors to the baseboard management controller; and
the baseboard management controller is configured to transmit a sensor data message to the remote management system including information based on the communicated data.

10. A system comprising at least one computing apparatus according to any of claims 1 to 9 housed within an enclosure and a remote management system for managing operating states of one or more components within the computing apparatus.

11. A system according to claim 10, further comprising a cooling system configured to remove heat from the enclosure.

12. A system according to claim 10 or 11, wherein
the remote management system is configured to set an operating state of the cooling system, to produce operating state setting information in dependence upon the operating state of the cooling system, and to send a message including the produced operating state setting information to the baseboard management controller of each of one or more of the at least one computing apparatuses housed within the enclosure.

13. A system according to claim 10, wherein the computing apparatus is a computing apparatus according to claim 9, and
the remote management system is configured to use the information from the sensor data message to select one of the plurality of operating states of the component in accordance with an operating state selection policy, and to transmit a message including operating state setting information to the baseboard management controller wherein the operating state setting information is a command to select a particular operating state.

14. A method for performance in a computing apparatus configured to run an operating system, the computing apparatus having a baseboard management controller configured to run independently of the operating system, and a component which is configured to operate in any one of a plurality of operating states, each operating state being associated with a different level of a performance characteristic, the method comprising:
at the baseboard management controller, receiving a message from a remote management system including operating state setting information, and communicating the operating state setting information to the operating system; and
accepting the communication of the operating state setting information to the operating system, the operating system using the operating state setting information to select an operating state for the component from among the plurality of operating states and instructing the component to operate in the selected operating state.

## Amended claims

### Amended claims in accordance with Rule 137(2) EPC.

**1.** A system comprising at least one computing apparatus (200) housed within an enclosure and a remote management system (300) for managing operating states of one or more components within the or each of the at least one computing apparatuses (200); wherein
the remote management system (300) is configured to set an operating state of a cooling system (310) configured to remove heat from the enclosure, to produce operating state setting information in dependence upon the operating state of the cooling system (310), and to send a message including the produced operating state setting information to a baseboard management controller (210) of each of one or more of the at least one computing apparatuses (200) housed within the enclosure; and
the or each of the computing apparatuses is configured to run an operating system (260) and comprises:
a component which is configured to operate in any one of a plurality of operating states, each operating state being associated with a different level of a performance characteristic;
a baseboard management controller (210) configured to run independently of the operating system (260), to receive the message from the remote management system (300) including operating state setting information, and to communicate the operating state setting information to the operating system (260); wherein
the operating system (260) is operable to accept the communication of the operating state setting information, to use the operating state setting information to select an operating state for the component from among the plurality of operating states, and to instruct the component to operate in the selected operating state.

**2.** A system according to claim 1, wherein the operating state setting information is a command to select a particular operating state.

**3.** A system according to claim 1 or 2, wherein the plurality of operating states of the component are defined by the Advanced Configuration and Power Interface, ACPI, standard, and the instructing of the component by the operating system is performed in accordance with the ACPI standard.

**4.** A system according to any of claims 1 to 3, wherein the net thermal contribution of the component in relation to the computing apparatus (200) is as a heat source, and the performance characteristic is power consumption.

**5.** A system according to any of claims 1 to 3, wherein the net thermal contribution of the component in relation to the computing apparatus (200) is as a cooling component, and the performance characteristic is heat transfer rate.

**6.** A system according to any of claims 1 to 5, wherein the computing apparatus (200) further comprises:
one or more sensors (240) configured to provide the operating system (260) with data relating to an environmental variable and/or an operating variable.

**7.** A system according to claim 6, wherein
the operating system (260) is configured to use the data received from the one or more sensors (240) to select one of the plurality of operating states of the component in accordance with an operating state selection policy, and to instruct the component to operate in the selected one of the plurality of operating states.

**8.** A system according to claim 7, wherein
the operating state selection information includes an operating state selection policy.

**9.** A system according to any of claims 6 to 8, wherein
the operating system (260) is configured to communicate the data received from the one or more sensors (240) to the baseboard management controller (210); and
the baseboard management controller (210) is configured to transmit a sensor data message to the remote management system (200) including information based on the communicated data.

**10.** A system according to any of claims 1 to 9, further comprising a cooling system (310) configured to remove heat from the enclosure.

**11.** A system according to claim 10, wherein the operating system (260) is configured to communicate the data received from the one or more sensors (240) to the baseboard management controller (210);
the baseboard management controller (210) is configured to transmit a sensor data message to the remote management system (300) including information based on the communicated data; and
the remote management system (300) is configured to use the information from the sensor data message to select one of the plurality of operating states of the component in accordance with an operating state selection policy, and to transmit a message including operating state setting information to the baseboard management controller (210) wherein the operating state setting information is a command to select a particular operating state.

**12.** A method for performance in a system comprising at least one computing apparatus (200) housed within an enclosure and a remote management system (300) for managing operating states of one or more components within the or each of the at least one computing apparatuses (200), the or each of the at least one computing apparatuses (200) being configured to run an operating system (260) and having a baseboard management controller (210) configured to run independently of the operating system (260), and a component which is configured to operate in any one of a plurality of operating states, each operating state being associated with a different level of a performance characteristic, the method comprising:
at the remote management system (300), setting an operating state of a cooling system (310) configured to remove heat from the enclosure, to produce operating state setting information in dependence upon the operating state of the cooling system (310), and sending a message including the produced operating state setting information to the baseboard management controller (210) of each of one or more of the at least one computing apparatuses (200) housed within the enclosure;
at the baseboard management controller (210), receiving a message from a remote management system (300) including operating state setting information, and communicating the operating state setting information to the operating system (260); and
accepting the communication of the operating state setting information to the operating system (260), the operating system (260) using the operating state setting information to select an operating state for the component from among the plurality of operating states and instructing the component to operate in the selected operating state.
